# EUROPÄISCHE PATENTANMELDUNG

(11) **EP 3 671 453 A1**
(43) Veröffentlichungstag der Anmeldung: **24.06.2020**
(21) Anmeldenummer: 19214598.5
(22) Anmeldetag: 09.12.2019
(51) Int. Cl.: G06F 9/50

(54) **VERFAHREN ZUM BETREIBEN EINES DEZENTRALEN RECHENNETZWERKS, INSBESONDERE EINES EDGE-CLOUD-COMPUTERS DES DEZENTRALEN RECHENNETZWERKS**

(30) Priorität: 21.12.2018 DE 102018009977; 25.01.2019 DE 102019200924
(71) Anmelder: Volkswagen AG, 38440 Wolfsburg (DE)
(72) Erfinder: Schmitz, Steffen, 46485 Wesel (DE); Kampermann, Jens, 42781 Haan (DE); Satyanarayana, Karthik, 44801 Bochum (DE)

(57) **Zusammenfassung**

Die Erfindung beschreibt ein Verfahren zum Betreiben eines Edge-Cloud-Computers (ECC) beim Bereitstellen einer Rechenleistung an mindestens ein Endgerät, insbesondere ein Fahrzeug (1), umfassend folgende Schritte:
1) Erfassen von Ressourceninformationen (CI) an dem Edge-Cloud-Computer (ECC),
2) Aussenden von Ressourceninformationen (CI) an das mindestens eine Endgerät,
3) Bereitstellen mindestens eines Teils einer Rechenkapazität des Edge-Cloud-Computers (ECC) zu dem mindestens einen Endgerät in Abhängigkeit von den Ressourceninformationen (CI).

## Beschreibung

Die Erfindung betrifft ein Verfahren zum Betreiben eines Edge-Cloud-Computers beim Bereitstellen einer Rechenleistung an mindestens ein Endgerät, insbesondere ein Fahrzeug, nach dem unabhängigen Verfahrensanspruch, ein entsprechendes Edge-Cloud-Netzwerk nach dem unabhängigen Systemanspruch und ein Endgerät, insbesondere in Form eines Fahrzeuges, welches eine Rechenleistung von einem entsprechenden Edge-Cloud-Computer beziehen kann, nach dem unabhängigen Vorrichtungsanspruch.

Heutzutage stellen neben, lokalen Rechnerkapazitäten, die Rechnerkapazitäten der Cloud die notwendigen Rechenkapazitäten zur Verfügung. Hierbei handelt es sich im Allgemeinen um eine einzelne, fest zugeordnete Ressource. Eine Entscheidung, auf welchem Rechner eine Rechenoperation dezentral ausgeführt werden soll, war damit bisher nicht notwendig. Bedingt durch die auftretenden Latenzzeiten, welche sich durch die langen Signallaufwege ergeben, ist die Ausführung von zeitkritischen Rechenalgorithmen in einer Cloud-Rechenkapazität nicht immer möglich.

Aufgrund der notwendigen Rechnerleistungen für selbstfahrende Kraftfahrzeuge und der Notwendigkeit kurzer Latenzzeiten, insbesondere bei zeitkritischen Anwendungen der selbstfahrenden Kraftfahrzeuge, empfiehlt es sich, bestimmte Rechenoperationen dezentral auszuführen. Dieses ist insbesondere auch bei vernetzten Fahrzeugen sinnvoll. Neben cloudbasierten, zentralen Rechnereinheiten wird dabei zunehmend auf Edge-Cloud-Computer (dezentrale Einheiten) gesetzt. Solche Rechner werden z.B. in der Nähe von Ampelkreuzungen oder unmittelbar an den Sendemasten von Funknetzwerken angeordnet. Stehen dabei mehrere Rechner zur Verfügung, ist eine geeignete Zuordnung der Rechenaufgabe zu einer Rechnerressource vorzunehmen. Um diese Zuordnung anforderungsgerecht vornehmen zu können, müssen dem Endgerät geeignete Informationen zur Verfügung gestellt werden. Hierfür ist ein Verfahren notwendig, das steuert, wann welche Informationen zwischen dem dezentralen Rechnernetzwerk, insbesondere dem Edge-Cloud-Computer innerhalb des dezentralen Rechennetzwerks, und dem Endgerät ausgetauscht werden.

Die Aufgabe der Erfindung ist es daher, ein verbessertes Verfahren zum Betreiben eines Edge-Cloud-Computers beim Bereitstellen einer Rechenleistung an mindestens ein Endgerät, insbesondere ein Fahrzeug, sowie ein verbessertes Edge-Cloud-Netzwerk bereitzustellen.

Insbesondere ist es Aufgabe der Erfindung, ein verbessertes Verfahren zur Verfügung zu stellen, welches steuert, wann welche Informationen zwischen dem Edge-Cloud-Computer und dem Endgerät ausgetauscht werden und welches eine zeitnahe, schnelle und effiziente Bereitstellung von dezentraler Rechenleistung am Endgerät und/oder an Endgeräten, insbesondere an Fahrzeugen, ermöglicht. Zudem ist es Aufgabe der Erfindung, ein verbessertes Edge-Cloud-Netzwerk zu ermöglichen, bei dem die Rechenleistung schnell und effizient bereitgestellt werden kann. Ferner ist es Aufgabe der Erfindung, ein entsprechendes Endgerät zur Verfügung zu stellen, welches eine effiziente Ausnutzung von Rechenkapazitäten in einem entsprechenden Edge-Cloud-Netzwerk ermöglicht.

Die erfindungsgemäße Aufgabe wird gelöst durch ein verbessertes Verfahren zum Betreiben eines Edge-Cloud-Computers beim Bereitstellen einer Rechenleistung an mindestens ein Endgerät, insbesondere ein Fahrzeug, mit den Merkmalen des unabhängigen Verfahrensanspruches, durch ein verbessertes Edge-Cloud-Netzwerk mit den Merkmalen des unabhängigen Systemanspruches und durch ein verbessertes Endgerät mit den Merkmalen des unabhängigen Vorrichtungsanspruches. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt ein Verfahren zum Betreiben eines Edge-Cloud-Computers (und/oder eines Cloud-Computers) beim Bereitstellen einer Rechenleistung an mindestens ein Endgerät, insbesondere ein Fahrzeug, umfassend folgende Schritte:
1) Erfassen von Ressourceninformationen an dem Edge-Cloud-Computer,
2) Aussenden von Ressourceninformationen an das mindestens eine Endgerät,
3) Bereitstellen mindestens eines Teils einer Rechenkapazität des Edge-Cloud-Computers zu dem mindestens einem Endgerät in Abhängigkeit von den Ressourceninformationen.

Unter einem Edge-Cloud-Computer im Sinne der Erfindung kann ein Rechenknoten eines Edge-Node-Netzwerkes verstanden werden, der über einen Prozessor mit einer Rechenleistung und eine Kommunikationseinheit zum Austauschen von Daten, bspw. mit einem anderen Edge-Cloud-Computer und/oder einem Endgerät, verfügt. Der Edge-Cloud-Computer kann zum Bereitstellen von Rechenleistung am Rande des Edge-Node-Netzwerkes dienen. Über die Kommunikationseinheit kann der Edge-Cloud-Computer Daten von einem Endgerät, wie z. B. einem Fahrzeug, empfangen, die er mit der eigenen Rechenleistung auf seinem Prozessor bearbeiten kann. Die Ergebnisse der Bearbeitung kann der Edge-Cloud-Computer über die Kommunikationseinheit zurück an das Fahrzeug senden. Bei den Daten kann es sich bspw. um Sensordaten handeln, die auf dem Edge-Cloud-Computer ausgewertet werden können. Auch ist es denkbar, dass der Edge-Cloud-Computer unterschiedliche Rechenaufgaben für unterschiedliche Systemanwendungen im Fahrzeug übernehmen kann.

Die Erfindung beruht auf dem Grundgedanken, dezentrale Rechnerkapazitäten an mobilen Endgeräten, insbesondere Fahrzeugen, zu nutzen. Hierzu ist es notwendig, zwischen den dezentralen Ressourcen (Edge-Cloud-Computer und ggf. Cloud-Computer) und den Endgeräten (wie z.B. automatisch fahrenden Fahrzeugen) Informationen zu den in dem Edge-Cloud-Computer vorhandenen Ressourcen auszutauschen. Die Edge-Cloud-Computer können vorteilhafterweise in einem begrenzten Abstand von dem Endgerät angeordnet sein (z.B. an Kreuzungen, an Netzwerkmasten, Straßenschildern usw.). Die Erfindung schlägt eine pushbasierte Informationsübermittlung von dem bzw. den Edge-Cloud-Computer(n) zu dem ggf. nachfragenden oder potentiell nach einer externen Rechenleistung suchenden Endgerät vor. Zum einen kann die Erfindung vorsehen, dass zunächst ein Empfangen einer Anfrage in dem Edge-Cloud-Computer abgewartet wird, um das Verfahren zu starten. Zum anderen ist es aber auch möglich, dass das Verfahren auch ohne eine Anfrage regelmäßig, bspw. periodisch, ausgeführt wird, um den Endgeräten in dem Einzugsbereich des Edge-Cloud-Computers die Ressourceninformationen vorausschauend zur Verfügung zu stellen, um bei zeitkritischen Anwendungen eine zeitnahe Bereitstellung von Rechenkapazitäten zu ermöglichen. Weiterhin ist es möglich, dass das pushbasierte Verfahren dann ausgeführt werden kann, wenn die Ressourcensituation sich verändert hat, um etwaige Änderungen der Ressourcensituation dem Endgerät mitzuteilen. Die Ressourcen können bei der Zusage des dezentralen Netzwerks genutzt werden, wobei bei jeder Änderung der Ressourcensituation die Änderung pushbasiert dem Endgerät mitgeteilt wird, um dem Endgerät eine erneute Entscheidungsmöglichkeit zu geben. Auf diese Weise können die Ressourcen innerhalb des dezentralen Netzwerks verbessert ausgenutzt werden.

Im Schritt 1) des erfindungsgemäßen Verfahrens werden die relevanten Ressourceninformationen an dem Edge-Cloud-Computer erfasst. Die Ressourceninformationen können unter anderem folgende Informationen umfassen: angebotene Dienste des Edge-Cloud-Computers, freie Rechnerkapazität auf dem Edge-Cloud-Computer, Vorhersage der Servicequalität (unter anderem Qualität der Netzwerkverbindung), Latenzabschätzung (kann unter anderem auch die Abschätzung eines kompletten Latenzbudgets beinhalten), Latenzbudget (umfassend alle Zeiträume vom Versenden der Anfrage bis zum Empfang der berechneten Daten bei dem anfragenden Endgerät), monetäre Kosten der Ausführung der Anwendung/Serviceleistung, Energiekosten im Sinne der Energiebudgetplanung (z.B. bei E-Fahrzeugen) usw. Der Edge-Cloud-Computer sendet die Ressourceninformationen an das Endgerät. Dem Endgerät obliegt dann die Aufgabe basierend auf den Ressourceninformationen zu entscheiden, wo im Edge-Cloud-Netzwerk eine Rechenoperation am günstigsten auszuführen ist. Entsprechende Rechenleistung wird schließlich auf einem ausgewählten Edge-Cloud-Computer bereitgestellt.

Die Erfindung ermöglicht somit eine effiziente Bereitstellung und Verteilung der Rechenleistung in einem Edge-Cloud-Netzwerk mit mindestens einem, vorzugsweise mehreren Edge-Cloud-Computern, der/die wie oben beschrieben betrieben werden kann/können. Die Ressourceninformationen helfen dem Endgerät eine zeitnahe, schnelle und effiziente Auswahl eines passenden Edge-Cloud-Computers durchzuführen, um die Rechenleistung für eine gewünschte Systemanwendung mit reduzierten Latenzzeiten von dem passenden Edge-Cloud-Computer zu erhalten. Dabei werden sogar zeitkritische Bedarfe in Fahrzeugen optimal berücksichtigt.

Ferner kann die Erfindung bei einem Verfahren zum Betreiben eines Edge-Cloud-Computers vorsehen, dass die Ressourceninformationen mindestens eine der folgenden Informationen umfassen:
- geografische Position,
- Verbindungsqualität,
- angebotene Dienstleistungen,
- Datenrate,
- Rechenleistung,
- Auslastung,
- Einzugsbereich,
- zeitliche Verfügbarkeit,
- verfügbare Rechenkapazität,
- Zuverlässigkeit,
- Wartezeit,
- Energieverbrauch,
- Kosten,
- voraussichtliche Route,
- voraussichtliche Geschwindigkeit.

Somit können aktuelle sowie veränderliche Informationen berücksichtigt werden, die für den Edge-Cloud-Computer spezifisch sein können. Diese Informationen sind außerdem entscheidungsrelevant für die Geeignetheit des Edge-Cloud-Computers zum Bereitstellen einer Rechenleistung an bestimmte Systemanwendungen im Endgerät, insbesondere in einem Fahrzeug. Eine voraussichtliche Route sowie voraussichtliche Geschwindigkeit sind Informationen, die bei den mobilen Edge-Cloud-Computern relevant sein können, um einen passenden Edge-Cloud-Computer aussuchen zu können, der sich voraussichtlich in dem Einzugsbereich des Endgerätes während einer bestimmten Zeit befinden wird.

Weiterhin kann die Erfindung bei einem Verfahren zum Betreiben eines Edge-Cloud-Computers vorsehen, dass die Rechenleistung für mindestens eine der folgenden Systemanwendungen am Endgerät ausgelagert werden kann:
- Navigation,
- Streaming,
- Diagnostik,
- Telematik,
- Updates,
- Informationsdienste,
- Entertainment,
- Datenverarbeitung,
- Gestenerkennung,
- Voice-Control,
- Auswertung von Sensordaten,
- Fusion von Sensordaten,
- Berechnung von Fahrmanövern,
- Fahrassistenzfunktionen,
- Fahrmodi gemäß einem von möglichen Automatisierungsgraden beim Betreiben des Fahrzeuges,
- hochautomatisiertes und/oder autonomes Fahren.

Somit können die Serviceleistungen innerhalb des Endgerätes, insbesondere eines Fahrzeuges, auf eine vorteilhafte Weise verbessert und erweitert werden. Der Kundenkomfort kann dadurch erheblich erhöht werden.

Des Weiteren kann die Erfindung bei einem Verfahren zum Betreiben eines Edge-Cloud-Computers vorsehen, dass die Verfahrensschritte 1) bis 3) auf eine Anfrage vom Endgerät durchgeführt werden. Auf diese Weise können die Energiekosten auf der Seite des Edge-Cloud-Computers gesenkt werden.

Zudem kann die Erfindung bei einem Verfahren zum Betreiben eines Edge-Cloud-Computers vorsehen, dass die Verfahrensschritte 1) bis 3) periodisch durchgeführt werden. Auf diese Weise könnte der Edge-Cloud-Computer seine Ressourceninformation nicht nur auf Anfrage (nach Empfang eines Bedarfssignals) sondern dauerhaft zu bestimmten (bspw. vom Protokoll vorgegebenen und z. B. den Endgeräten bekannten) Zeiten versenden. Somit wäre das Endgerät immer in der Lage, sich ein Bild der Angebotslage des Edge-Cloud-Computers zu verschaffen. Bei latenzkritischen Anwendungen könnte das Anfrageprotokoll entfallen und damit die Latenz entsprechend reduziert werden.

Darüber hinaus ist es denkbar, dass die Verfahrensschritte 1) bis 3) bei einer Änderung von Ressourceninformationen und/oder pushbasiert durchgeführt werden. Auf diese Weise kann das Verfahren besonders ressourcenschonend durchgeführt werden.

Außerdem kann die Erfindung bei einem Verfahren zum Betreiben eines Edge-Cloud-Computers vorsehen, dass die Ressourceninformationen nach einem Prinzip Multicast, Broadcast oder Geocast ausgesendet werden. Multicast beschreibt das Versenden der Ressourceninformationen von einem Sender an viele Teilnehmer. Im Broadcast werden die Ressourceninformationen von einem Sender an alle Teilnehmer verschickt. Geocast beschreibt ein Prinzip, bei dem alle Teilnehmer in einer vordefinierten Region die Ressourceninformationen empfangen.

Ferner kann die Erfindung bei einem Verfahren zum Betreiben eines Edge-Cloud-Computers vorsehen, dass der Edge-Cloud-Computer in Form eines stationären und/oder mobilen Edge-Nodes eines Netzwerkes, einer Basisstation eines Mobilfunkanbieters und/oder eines Netzwerkanbieters, eines Mobiltelefons, eines Smartphones, eines Tabletcomputers, eines Fahrzeuges und/oder einer Drohne ausgeführt ist. Somit kann ein flexibles Netzwerk mit erweiterten Funktionen und mit verbesserter Abdeckung sowie Konnektivität zur Verfügung gestellt werden.

Weiterhin kann ein Verfahren im Rahmen der Erfindung mindestens einen weiteren Schritt aufweisen:
3) Bestimmen mindestens einer Zone innerhalb eines Edge-Cloud-Netzwerkes mit einer reduzierten Rechenkapazität,
4) Bereitstellen des Edge-Cloud-Computers in die bestimmte Zone mit der reduzierten Rechenkapazität.

Somit kann mithilfe der Erfindung ein verbessertes Edge-Node-Netzwerk ermöglicht werden.

Des Weiteren wird die erfindungsgemäße Aufgabe durch ein Edge-Cloud-Netzwerk gelöst, aufweisend mindestens einen Edge-Cloud-Computer, welcher wie oben beschrieben betrieben werden kann. Vorteilhafterweise kann das Edge-Cloud-Netzwerk mehrere Edge-Cloud-Computer umfassen. Dabei ist es denkbar, dass die mehreren Edge-Cloud-Computer im Sinne der Erfindung betrieben werden können. Durch das erfindungsgemäße Edge-Cloud-Netzwerk werden weiterhin die gleichen Vorteile erreicht, die oben in Verbindung mit dem erfindungsgemäßen Verfahren zum Betreiben eines Edge-Cloud-Computers beschrieben wurden. Auf diese Vorteile wird vorliegend vollumfänglich Bezug genommen.

Zudem wird die erfindungsgemäße Aufgabe durch ein Endgerät gelöst, aufweisend: eine Steuereinheit zum Auslagern von Rechenleistung aus dem Endgerät an mindestens einen Edge-Cloud-Computer (und ggf. mindestens einen Cloud-Computer) und eine Kommunikationseinheit zum Empfangen von Ressourceninformationen von den mindestens einen Edge-Cloud-Computer (und ggf. von dem mindestens einen Cloud-Computer) und/oder zum Aussenden einer Anfrage an den mindestens einen Edge-Cloud-Computer (und ggf. an den mindestens einen Cloud-Computer). Vorteilhafterweise kann das Endgerät von mehreren Edge-Cloud-Computern (und ggf. von den mehreren Cloud-Computern) die Ressourceninformationen empfangen und/oder an mehrere Edge-Cloud-Computer (und ggf. an mehrere Cloud-Computer) eine Anfrage aussenden. Von den mehreren verfügbaren Computern wird schließlich ein Computer ausgewählt, der nach den Ressourceninformationen am besten für eine gewünschte Systemanwendung geeignet ist. Mithilfe des erfindungsgemäßen Endgeräts werden ferner die gleichen Vorteile erreicht, die oben in Verbindung mit dem erfindungsgemäßen Verfahren zum Betreiben eines Edge-Cloud-Computers beschrieben wurden. Auf diese Vorteile wird vorliegend vollumfänglich Bezug genommen.

Außerdem kann die Erfindung vorsehen, dass das Endgerät in Form eines Fahrzeuges ausgeführt ist. Auf diese Weise können die Vorteile der Erfindung insbesondere bei Fahrzeugen umgesetzt werden, die aufgrund ihrer Mobilität und oft zeitkritischen Anwendungen von den Vorteilen der Erfindung profitieren können.

Ferner kann ein Endgerät im Rahmen der Erfindung ein Managementsystem vorsehen, um mindestens eine Anwendung an einem Endgerät zu einem Edge-Cloud-Computer in Abhängigkeit von seinen Ressourceninformationen zuzuordnen. Das Endgerät, insbesondere das Fahrzeug oder einige Systeme innerhalb des Fahrzeuges, kann/können im Rahmen der Erfindung Daten an den mindestens einen Edge-Cloud-Computer (und ggf. mindestens einen Cloud-Computer) schicken, die dort mithilfe einer externen Rechenleistung bearbeitet werden sollen, wenn bspw. eine eigene Rechenleistung im Fahrzeug nicht vorhanden ist, nicht ausreichend ist oder anderweitig benutzt wird. Das Managementsystem hilft dabei, mindestens einen (von ggf. mehreren naheliegenden) Edge-Cloud-Computer und/oder mindestens einen (von ggf. mehreren entfernten) Cloud-Computer auszuwählen, der von allen verfügbaren Computern am besten zum Ausführen einer gewünschten Systemanwendung im Fahrzeug geeignet ist. Hierzu kann sich das Managementsystem den empfangenen Ressourceninformationen und/oder Anwendungsinformationen bedienen.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigt:
- Fig. 1: eine schematische Darstellung eines Edge-Cloud-Computers im Rahmen eines Edge-Cloud-Netzwerkes, welches gemäß einem erfindungsgemäßen Verfahren betrieben wird und

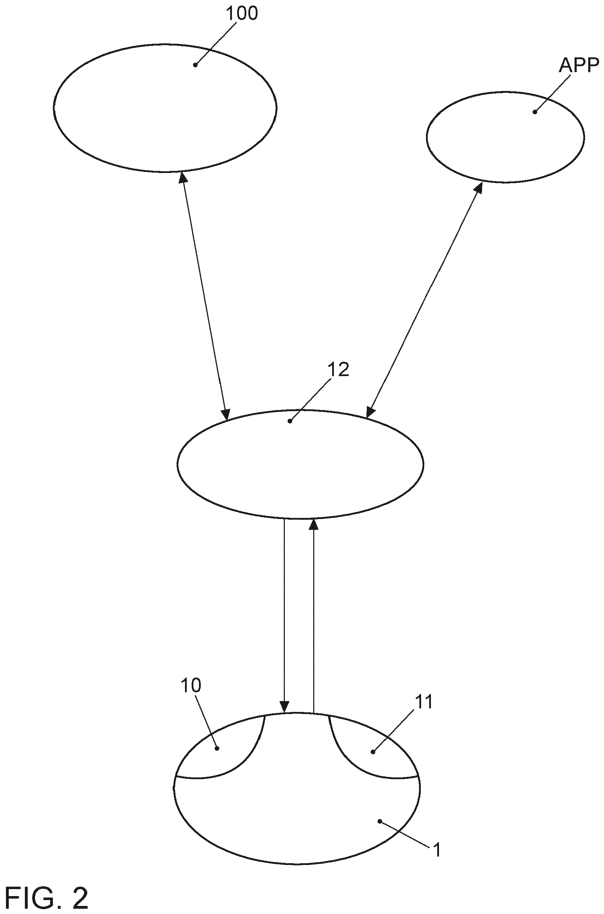

- Fig. 2: eine schematische Darstellung eines erfindungsgemäßen Endgerätes.

In den verschiedenen Figuren werden die gleichen technischen Merkmale mit denselben Bezugszeichen bezeichnet, wobei in der Regel ein technisches Merkmal nur einmal beschrieben wird.

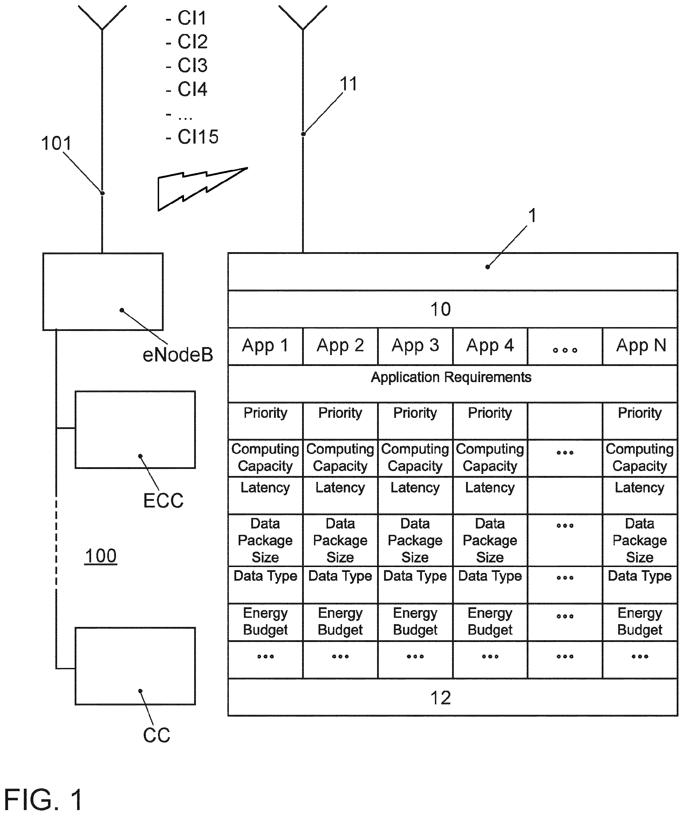

Die Figur 1 veranschaulicht das erfindungsgemäße Verfahren zum Betreiben eines Edge-Cloud-Computers ECC beim Bereitstellen einer Rechenleistung an mindestens ein Endgerät, insbesondere ein Fahrzeug 1, umfassend folgende Schritte:
1) Erfassen von Ressourceninformationen CI an dem Edge-Cloud-Computer ECC,
2) Aussenden von Ressourceninformationen CI an das mindestens eine Endgerät,
3) Bereitstellen mindestens eines Teils einer Rechenkapazität des Edge-Cloud-Computers ECC zu dem mindestens einem Endgerät in Abhängigkeit von den Ressourceninformationen CI.

Ein Edge-Cloud-Computer ECC kann am Rande eines Edge-Cloud-Netzwerkes 100 bereitgestellt werden und über einen Prozessor mit einer Rechenleistung und eine Kommunikationseinheit 101 zum Austauschen von Daten, bspw. mit dem erfindungsgemäßen Endgerät, vorzugsweise in Form eines Fahrzeuges 1, verfügen. Der Edge-Cloud-Computer ECC kann zum Bereitstellen von Rechenleistung am Rande des Edge-Node-Netzwerkes 100 dienen. Über die Kommunikationseinheit 101 kann der Edge-Cloud-Computer ECC Ressourceninformationen CI an das mindestens eine Endgerät senden und Daten vom Fahrzeug 1 empfangen, die er mit der eigenen Rechenleistung auf seinem Prozessor bearbeiten kann. Die Ergebnisse der Bearbeitung kann der Edge-Cloud-Computer ECC über die Kommunikationseinheit 101 zurück an das Fahrzeug 1 senden. Bei den Daten kann es sich bspw. um Sensordaten handeln, die auf dem Edge-Cloud-Computer ECC ausgewertet werden können. Auch ist es denkbar, dass der Edge-Cloud-Computer ECC unterschiedliche Rechenaufgaben für unterschiedliche Systemanwendungen APP im Fahrzeug 1 übernehmen kann.

Das Fahrzeug 1 oder einige Systeme innerhalb des Fahrzeuges 1 können im Rahmen der Erfindung Daten an mindestens einen Edge-Cloud-Computer ECC und ggf. mindestens einen Cloud-Computer CC schicken, die dort extern bearbeitet werden sollen, wenn bspw. eine eigene Rechenleistung im Fahrzeug 1 nicht vorhanden ist, nicht ausreichend ist oder anderweitig benutzt wird. Erfindungsgemäß kann mindestens ein (von ggf. mehreren naheliegenden) Edge-Cloud-Computer ECC und/oder mindestens ein (von ggf. mehreren entfernten) Cloud-Computer CC ausgewählt werden, der zum Ausführen einer gewünschten Systemanwendung APP von bzw. für das Fahrzeug 1 geeignet ist.

Ein Edge-Cloud-Computer ECC kann als ein stationärer Edge-Cloud-Computer ECC, bspw. in Form einer Basisstation eines Mobilfunkanbieters und/oder eines Netzwerkanbieters, oder als ein mobiler Edge-Cloud-Computer ECC ausgeführt sein. Ein mobiler Edge-Cloud-Computer ECC im Sinne der Erfindung kann flexibel an Orten aufgestellt werden, wo die Rechenleistung in Fahrzeugen 1 benötigt wird, bspw. an Straßenkreuzungen, Parkplätzen usw. Zudem kann sich der mobile Edge-Cloud-Computer ECC im Sinne der Erfindung bewegen, während er die Rechenleistung bereitstellt. Als ein mobiler Edge-Cloud-Computer ECC im Sinne der Erfindung kann ein Fahrzeug, bspw. ein Flottenfahrzeug, eine Drohne oder eine mobile Basisstation verwendet werden.

Die Erfindung nutzt dezentrale Rechnerkapazitäten als Ressourcen für Systemanwendungen APP in mobilen Endgeräten, wie z. B. Fahrzeugen 1. Dabei können sich die Edge-Cloud-Computer ECC in der Nähe (z.B. 100 bis 500 m) vom Fahrzeug 1 befinden (z.B. an Kreuzungen oder an anderen Fahrzeugen). Cloud-Computer CC können sich wiederum in entfernten Rechenzentren befinden. Die Edge-Cloud-Computer ECC und/oder Cloud-Computer CC können gemäß der Erfindung betrieben werden. Bei zeitkritischen Anwendungen sind insbesondere die naheliegenden Edge-Cloud-Computer ECC zur Vermeidung von Wartezeiten vorteilhaft.

Das erfindungsgemäße Verfahren beschreibt, wie die Informationen zwischen den dezentralen Ressourcen (Edge-Cloud-Computer ECC und/oder Cloud-Computer CC) und dem Endgerät (z.B. einem automatisch fahrenden Fahrzeug 1) ausgetauscht werden, um eine verbesserte Zuordnung zwischen einer Anwendung auf dem Endgerät 1 und mindestens einer externen Rechenressource zu ermöglichen. Die Edge-Cloud-Computer ECC können vorteilhafterweise dabei in einem begrenzten Abstand von dem Endgerät 1 angeordnet sein. Die Erfindung schlägt eine pushbasierte Informationsübermittlung von dem oder von mehreren Edge-Cloud-Computern ECC im Rahmen eines Edge-Cloud-Netzwerkes 100 zu dem ggf. nachfragenden oder potentiell nach einer externen Rechenleistung suchenden Endgerät vor.

Im Rahmen der Erfindung ist es möglich, dass zunächst ein Empfangen einer Anfrage in dem Edge-Cloud-Computer ECC abgewartet wird, um das Verfahren zu starten. Somit können die Energiekosten auf der Seite des Edge-Cloud-Computers ECC gesenkt werden.

Zudem ist es im Rahmen der Erfindung möglich, dass das Verfahren auch ohne eine Anfrage regelmäßig, bspw. periodisch, ausgeführt wird, um den Endgeräten in dem Einzugsbereich des Edge-Cloud-Computers ECC die Ressourceninformationen CI regelmäßig zur Verfügung zu stellen, um bei zeitkritischen Anwendungen eine zeitnahe Zurverfügungstellung von Rechenkapazitäten zu ermöglichen.

Im Schritt 1) des erfindungsgemäßen Verfahrens werden die relevanten Ressourceninformationen CI an dem Edge-Cloud-Computer ECC erfasst, wie:
- geografische Position CI1,
- Verbindungsqualität CI2,
- angebotene Dienstleistungen CI3,
- Datenrate CI4,
- Rechenleistung CI5,
- Auslastung CI6,
- Einzugsbereich CI7,
- zeitliche Verfügbarkeit CI8,
- verfügbare Rechenkapazität CI9,
- Zuverlässigkeit CI10,
- Wartezeit CI11,
- Energieverbrauch CI12,
- Kosten CI13,
- voraussichtliche Route CI14,
- voraussichtliche Geschwindigkeit CI15.

Die beiden letzten Ressourceninformationen CI14 und CU15 können insbesondere bei der Wahl geeigneter mobiler Edge-Cloud-Computer ECC relevant sein.

Die Rechenleistung kann im Endgerät bspw. für mindestens eine der folgenden Systemanwendungen APP benötigt werden:
- Navigation,
- Streaming,
- Diagnostik,
- Telematik,
- Updates,
- Informationsdienste,
- Entertainment,
- Datenverarbeitung,
- Gestenerkennung,
- Voice-Control,
- Auswertung von Sensordaten,
- Fusion von Sensordaten,
- Berechnung von Fahrmanövern,
- Fahrassistenzfunktionen,
- Fahrmodi gemäß einem von möglichen Automatisierungsgraden beim Betreiben des Fahrzeuges,
- hochautomatisiertes und/oder autonomes Fahren.

Im Rahmen der Erfindung ist es ferner denkbar, dass die Ressourceninformationen CI nach einem Prinzip Multicast, Broadcast oder Geocast ausgesendet werden. Multicast beschreibt das Versenden der Ressourceninformationen von einem Sender an viele Teilnehmer. Im Broadcast werden die Ressourceninformationen von einem Sender an alle Teilnehmer verschickt. Geocast beschreibt ein Prinzip, bei dem alle Teilnehmer in einer vordefinierten Region die Ressourceninformationen empfangen.

Vorteilhafterweise kann die Erfindung vorsehen, dass innerhalb eines Edge-Cloud-Netzwerkes 100 Zonen mit einer reduzierten Rechenkapazität ermittelt werden, um gezielt in diese Zonen einen Edge-Cloud-Computer ECC bereitzustellen, welcher wie oben beschrieben betrieben werden kann. Somit kann mithilfe der Erfindung ein dynamisches Edge-Node-Netzwerk 100 bereitgestellt werden, welches eine verbesserte Netzwerkabdeckung und eine verbesserte Ressourcenverteilung aufweist. Ein entsprechendes Edge-Cloud-Netzwerk 100 im Rahmen der Erfindung kann mehrere Edge-Cloud-Computer ECC umfassen, die gemäß dem erfindungsgemäßen Verfahren betrieben werden können.

Ein entsprechendes Endgerät im Sinne der Erfindung kann bspw. in Form eines Fahrzeuges 1, insbesondere eines Elektrofahrzeuges, ausgeführt sein und folgende Elemente aufweisen: eine Steuereinheit 10 zum Auslagern von Rechenleistung aus dem Endgerät an mindestens einen Edge-Cloud-Computer ECC (und ggf. mindestens einen Cloud-Computer CC) und eine Kommunikationseinheit 11 zum Empfangen von Ressourceninformationen CI von dem mindestens einen Edge-Cloud-Computer ECC (und ggf. von dem mindestens einen Cloud-Computer CC) und/oder zum Aussenden einer Anfrage an den mindestens einen Edge-Cloud-Computer ECC (und ggf. an den mindestens einen Cloud-Computer CC).

Das Endgerät kann vorteilhafterweise von mehreren Edge-Cloud-Computern ECC (und ggf. von den mehreren Cloud-Computern CC) die Ressourceninformationen CI empfangen und/oder an mehrere Edge-Cloud-Computer ECC (und ggf. an mehrere Cloud-Computer CC) eine Anfrage nach einer Rechenleistung aussenden. Von den mehreren verfügbaren Computern ECC, CC kann das erfindungsgemäße Endgerät, insbesondere ein Managementsystem 12 des erfindungsgemäßen Endgeräts, einen Computer ECC, CC auswählen, der nach den Ressourceninformationen CI am besten für eine gewünschte Systemanwendung APP geeignet ist. Bei der Wahl eines passenden Computers ECC, CC kann sich das Managementsystem 12 den empfangenen Ressourceninformationen CI und/oder Anwendungsinformationen über die gewünschte Systemanwendung APP bedienen.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 1: Fahrzeug

- 10: Steuereinheit
- 11: Kommunikationseinheit
- 12: Managementsystem

- 100: Edge-Cloud-Netzwerk
- 101: Kommunikationseinheit

- APP: Systemanwendung

- ECC: Edge-Cloud-Computer
- CC: Cloud-Computer

- CI: Ressourceninformation
- CI1: geografische Position
- CI2: Verbindungsqualität
- CI3: angebotene Dienstleistungen
- CI4: Datenrate
- CI5: Rechenleistung
- CI6: Auslastung
- CI7: Einzugsbereich
- CI8: zeitliche Verfügbarkeit
- CI9: verfügbare Rechenkapazität
- CI10: Zuverlässigkeit
- CI11: Wartezeit
- CI12: Energieverbrauch
- CI13: Kosten
- C14: voraussichtliche Route
- CI15: voraussichtliche Geschwindigkeit

## Patentansprüche

1. Verfahren zum Betreiben eines Edge-Cloud-Computers (ECC) beim Bereitstellen einer Rechenleistung an mindestens ein Endgerät,
umfassend folgende Schritte:
1) Erfassen von Ressourceninformationen (CI) an dem Edge-Cloud-Computer (ECC),
2) Aussenden von Ressourceninformationen (CI) an das mindestens eine Endgerät,
3) Bereitstellen mindestens eines Teils einer Rechenkapazität des Edge-Cloud-Computers (ECC) zu dem mindestens einem Endgerät in Abhängigkeit von den Ressourceninformationen (CI),
4) Bestimmen mindestens einer Zone innerhalb eines Edge-Cloud-Netzwerkes (100) mit einer reduzierten Rechenkapazität,
5) Bereitstellen des Edge-Cloud-Computers (ECC) in die bestimmte Zone mit der reduzierten Rechenkapazität.

2. Verfahren nach Anspruch 1,
**dadurch gekennzeichnet,**
**dass** die Ressourceninformationen (CI) mindestens eine der folgenden Informationen umfassen:
- geografische Position (CI1),
- Verbindungsqualität (CI2),
- angebotene Dienstleistungen (CI3),
- Datenrate (CI4),
- Rechenleistung (CI5),
- Auslastung (CI6),
- Einzugsbereich (CI7),
- zeitliche Verfügbarkeit (CI8),
- verfügbare Rechenkapazität (CI9),
- Zuverlässigkeit (CI10),
- Wartezeit (CI11),
- Energieverbrauch (CI12),
- Kosten (CI13),
- voraussichtliche Route (CI14),
- voraussichtliche Geschwindigkeit (CI15).

3. Verfahren nach einem der vorhergehenden Ansprüche,
**dadurch gekennzeichnet,**
**dass** die Rechenleistung für mindestens eine der folgenden Systemanwendungen (APP) am Endgerät ausgelagert werden kann:
- Navigation,
- Streaming,
- Diagnostik,
- Telematik,
- Updates,
- Informationsdienste,
- Entertainment,
- Datenverarbeitung,
- Gestenerkennung,
- Voice-Control,
- Auswertung von Sensordaten,
- Fusion von Sensordaten,
- Berechnung von Fahrmanövern,
- Fahrassistenzfunktionen,
- Fahrmodi gemäß einem von möglichen Automatisierungsgraden beim Betreiben des Fahrzeuges (1),
- hochautomatisiertes und/oder autonomes Fahren.

4. Verfahren nach einem der vorhergehenden Ansprüche,
**dadurch gekennzeichnet,**
**dass** die Verfahrensschritte 1) bis 3) auf eine Anfrage vom Endgerät durchgeführt werden.

5. Verfahren nach einem der vorhergehenden Ansprüche,
**dadurch gekennzeichnet,**
**dass** die Verfahrensschritte 1) bis 3) periodisch durchgeführt werden,
oder dass die Verfahrensschritte 1) bis 3) bei einer Änderung von Ressourceninformationen (CI) und/oder pushbasiert durchgeführt werden.

6. Verfahren nach einem der vorhergehenden Ansprüche,
**dadurch gekennzeichnet,**
**dass** die Ressourceninformationen (CI) nach einem Prinzip Multicast, Broadcast oder Geocast ausgesendet werden.

7. Verfahren nach einem der vorhergehenden Ansprüche,
**dadurch gekennzeichnet,**
**dass** der Edge-Cloud-Computer (ECC) in Form eines stationären und/oder mobilen Edge-Nodes eines Netzwerkes, einer Basisstation eines Mobilfunkanbieters und/oder eines Netzwerkanbieters, eines Mobiltelefons, eines Smartphones, eines Tabletcomputers, eines Fahrzeuges (1) und/oder einer Drohne ausgeführt ist.

8. Edge-Cloud-Netzwerk (100), aufweisend:
mindestens einen Edge-Cloud-Computer (ECC), der nach einem der vorhergehenden Ansprüche betrieben wird.

9. Endgerät, aufweisend:
eine Steuereinheit (10) zum Auslagern von Rechenleistung aus dem Endgerät an mindestens einen Edge-Cloud-Computer (ECC), der gemäß einem der vorhergehenden Ansprüche 1 bis 7 betrieben wird, und
eine Kommunikationseinheit (11) zum Empfangen von Ressourceninformationen (CI) von den mindestens einen Edge-Cloud-Computer (ECC) und/oder zum Aussenden einer Anfrage an den mindestens einen Edge-Cloud-Computer (ECC).

10. Endgerät nach dem vorhergehenden Anspruch,
**dadurch gekennzeichnet,**
**dass** das Endgerät in Form eines Fahrzeuges (1) ausgeführt ist.

11. Endgerät nach einem der vorhergehenden Ansprüche 10 oder 11,
**dadurch gekennzeichnet,**
**dass** ein Managementsystem (12) vorgesehen ist, um mindestens eine Anwendung (APP) an einem Endgerät zu einem Edge-Cloud-Computer (ECC) in Abhängigkeit von seinen Ressourceninformationen (CI) zuzuordnen.
